# EUROPÄISCHE PATENTSCHRIFT

(11) **EP 1 505 843 B1**
(45) Veröffentlichungstag und Bekanntmachung des Hinweises auf die Patenterteilung: **23.11.2005**
(21) Anmeldenummer: 03018117.6
(22) Anmeldetag: 08.08.2003
(51) Int. Cl.: H04Q 7/28

(54) **Kommunikationsverfahren zur Übertragung von Sprache und/oder Daten**
Communication method for transmission of voice and/or data
Méthode de communication de transmission de voix et/ou données

(43) Veröffentlichungstag der Anmeldung: 09.02.2005
(73) Patentinhaber: EADS TELECOM Deutschland GmbH, D-89081 Ulm (DE)
(72) Erfinder: Tarralle, Oliver, D-89134 Blaustein (DE); Dittrich, Juergen, D-89250 Senden (DE); Olbrich, Dieter, D-89150 Laichingen (DE); Zerbib, Daniel, F-75015 Paris (FR); Pascal, Guillaume, F-78530 Buc (FR); Giroux, Julien, F-78510 Triel sur Seine (FR)
(74) Vertreter: Strobel, Wolfgang

(56) Entgegenhaltungen:
- EP-A- 0 431 453
- DE-A- 19 719 955
- GB-A- 2 354 672

## Beschreibung

Die vorliegende Erfindung betrifft ein Kommunikationsverfahren, insbesondere für ein PMR-System, zur Übertragung von Sprache und/oder Daten, für eine Mehrzahl von individuellen Teilnehmern.

Aus der DE 39 39 903 A1 ist ein Kommunikationssystem in Form eines Funksystems bekannt, dessen Teilnehmerstruktur gering organisatorisch oder hierarchisch ausgeprägt ist, wobei mit dem Funksystem der bei häufig wechselnder Gruppenzusammensetzung und Aufgabenzuordnung erhebliche Organisations- und Abwicklungsaufwand von Funkkommunikationsverbindungen der Teilnehmer untereinander, mit einer Zentrale oder Drahtteilnehmern verringert werden soll.

Das Funksystem des Standes der Technik weist eine Zentrale und mehrere über individuelle eigene Rufnummern selektiv anrufbare Teilnehmer auf, wobei eine Mehrzahl von Objektbezeichnungen vorgesehen sind, die von den im System zulässigen Rufnummern unterscheidbar sind, auf Anforderung eines Teilnehmers, die eine Objektbezeichnung und die eigene Rufnummer des Teilnehmers enthält, an die Zentrale, die Zentrale aufgrund einer gespeicherten Zuordnungsvorschrift den Teilnehmern eine objektbezogene Rufnummer zuteilt und diese an das Teilnehmergerät übermittelt, die von der Zentrale zugeteilte Rufnummer im Teilnehmergerät mit Bezug zur Objektbezeichnung und mit Bezug zur Objektbezeichnung und Teilnehmer in der Zentrale gespeichert wird, an die Zentrale ein Objekt-Rufwunsch nach einer Funkkommunikation unter Angabe einer Objektbezeichnung gerichtet werden kann und die Zentrale auf einen Objekt-Rufwunsch hin nach Maßgabe der angegebenen Objektbezeichnung und der zugeteilten Rufnummern eine die Herstellung der gewünschten Funkkommunikation ermöglichende Rufnummer ermittelt.

Das Funksystem dieses Standes der Technik weist jedoch einige Nachteile auf. Es muß zunächst eine Zuordnung eines Teilnehmers zu einer Objektbezeichnung erfolgen, indem eine Anfrage per Funk an die Zentrale gerichtet wird und sodann dem anfragenden Teilnehmer zu seiner Objektbezeichnung eine neue Rufnummer zugeteilt wird. Danach erst wird die Kommunikation aufgebaut, nachdem ein Objekt-Rufwunsch an die Zentrale per Funk übermittelt wurde. Derartige Funksysteme, beispielsweise im Einsatz eines Großflughafens, können viele tausend Teilnehmer aufweisen, so daß ein erheblicher Funkverkehr besteht. Besonders nachteilig beim System des Standes der Technik ist deshalb die Notwendigkeit, vor Aufbau der Kommunikation mit den einzelnen Teilnehmern mehrfache Funkübertragungen zu benötigen und dabei begrenzte Funkkanalressourcen zu belegen.

Das Funksystem des Standes der Technik weist eine Architektur auf, in der eine Zentrale die Objektbezeichnungen und die Rufnummern der einzelnen Teilnehmer verwaltet. Störungen in der Zentrale können zum Totalausfall des Funksystems führen, dessen Auswirkungen beispielsweise im Falle eines Flughafens leicht vorstellbar sind.

Aus der GB-A-2 354 672 ist ein Verfahren und eine Vorrichtung zur Zuordnung einer Objektidentität zu einem mobilen Teilnehmergerät in einem Kommunikationssystem bekannt. Die Zuordnung der eindeutigen Objektidentität erfolgt nach einer Reihe von Prüfschritten in, falls erforderlich, sämtlichen Teilnehmergeräten, ob eine ausgewählte Objektidentität bereits einem anderen Teilnehmergerät zugeordnet ist. Die Prüfanfragen und -ergebnisse werden über Sendenachrichten zwischen den Teilnehmergeräten des Kommunikationssystems übermittelt.

Nachteilig an diesem Zuordnungsverfahren und -system ist das Erfordernis, die Prüfschritte über eine Reihe von Sendenachrichten durchzuführen, die Zeit kosten und Netzkapazitäten des Kommunikationssystems belegen. Denn sämtliche Teilnehmergeräte des Kommunikationssystems müssen sich sozusagen untereinander, ggf. unter Einbeziehung ihrer Benutzer, über die Zuordnung der Objektidentitäten abstimmen. Darüber hinaus ist eine Zuordnung von Objektidentitäten notwendigerweise eindeutig, was dieses Verfahren bzw. diese Vorrichtung für Kommunikationssysteme ungeeignet macht, bei denen es wünschenswert ist, mehreren Teilnehmern temporär dieselbe Objektidentität zuzuteilen, d.h. redundant zu vergeben. Ein weiterer Nachteil ist, dass die Objektidentität in der GB-A-2 354 672 nicht frei strukturierbar ist. Zwei unterschiedliche Strukturen von Objektidentitäten nebeneinander sind mit diesem Zuordnungsverfahren und -system nicht möglich, da beim Abprüfen nur Objektidentitäten mit identischer Struktur miteinander verglichen werden können.

Die DE 197 19 955 A1 beschreibt ein Verfahren zur Erreichbarkeit von Teilnehmern in einem Funkkommunikationssystem, bei dem Teilnehmern eine Objektkennung temporär zugewiesen wird. Die temporären Objektkennungen werden dabei durch Teilnehmerdatensätze gebildet, die eine gesamte Teilnehmerumgebung innerhalb eines VPN definieren. Die Zuordnung der Teilnehmerdatensätze erfolgt dabei über so genannte Clearingstellen, die zentrale Einrichtungen darstellen und in denen Prüfmechanismen zur Anwendung kommen, die über die mögliche und korrekte Zuordnung der Teilnehmerdatensätze an die Teilnehmer entscheiden.

Dieses Verfahren weist als Nachteil zentrale Komponenten auf, die über die korrekte Zuordnung der Objektkennung bzw. Teilnehmerdatensätze wachen. Eine freie Strukturierbarkeit der Objektbezeichnung ist, wie oben bereits beschrieben, ebenfalls nicht gegeben. Zwei unterschiedliche Strukturen von Objektkennungen nebeneinander sind mit diesem Verfahren nicht möglich.

Der vorliegenden Erfindung liegt deshalb die Aufgabe zugrunde, ein Verfahren zur Übertragung von Sprache und/oder Daten an eine Mehrzahl von individuellen Teilnehmern in einem Kommunikationssystem zu schaffen, mit dem die obengenannten Nachteile überwunden werden.

Diese Aufgabe wird durch die Merkmale des Patentanspruchs gelöst.

Das erfindungsgemäße Kommunikationsverfahren kommt insbesondere in einem PMR-System, also einem Professional bzw. Private Mobile Radio-System, wie es beispielsweise bei Flughäfen Verwendung findet, zur Anwendung.

Im Sinne der vorstehenden Lehre wird unter Teilnehmergerät ein drahtloses Funkgerät, ein Festnetzgerät, beispielsweise ein Telefon, ein Mobiltelefon oder ein Rechner verstanden. Eine Objekt-Kommunikation ist eine Verbindung der Teilnehmer mit zutreffender Objektbezeichnung.

Mit Hilfe dieses erfindungsgemäßen Verfahrens wird somit vorteilhafterweise erreicht, daß dezentral Teilnehmer mit einer definierten Objektbezeichnung in eine Objektkommunikation eintreten können und Sprache und/oder Daten an andere Teilnehmer, die durch die Objektbezeichnung bestimmt sind, übertragen oder von diesen empfangen können. Der Übertragungs- bzw. Funkverkehr kann dabei gegenüber herkömmlichen Systemen deutlich verringert werden und die Übertragung erfolgt unabhängig von einer zentralen Einheit, also dezentral.

Mit besonderem Vorteil kann die Objektbezeichnung durch den Teilnehmer, der über das Teilnahmegerät verfügt, eingegeben werden. Damit wird auf einfache und flexible Weise die Zuordnung der Objektbezeichnung in das Teilnehmergerät erreicht, was besonders vorteilhaft auf dezentrale Weise erfolgt.

Weiterhin kann vorteilhafterweise die Objektbezeichnung auch über einen Teilnehmer, der über ein anderes Teilnehmergerät verfügt in ein Teilnehmergerät eingegeben werden. Das andere Teilnehmergerät übermittelt die Objektbezeichnung an das erste Teilnehmergerät, so daß dieser Teilnehmer auch für ein weiteres Objekt für eine Objektkommunikation zur Verfügung steht.

Vielfach weisen Kommunikationsnetze Verwaltungsrechner auf, die diese Netze verwalten. So kann erfindungsgemäß mit Vorteil die Initialisierung eines Teitnehmergeräts d.h. die Zuordnung der Objektbezeichnung über einen solchen Verwaltungsrechner erfolgen.

Werden mehrere Objektbezeichnungen in ein Teilnehmergerät eingegeben, so kann dieser Teilnehmer an mehreren Objekt-Kommunikationen teilnehmen, d. h. er steht für die objektbezogene Kommunikation bei mehreren Objekten zur Verfügung.

Mit besonderem Vorteil dient die im Kommunikationverfahren verwendete Objektbezeichnung gleichzeitig als Kommunikationsidentität, wodurch eine zusätzliche Rufnummernverwaltung und Zuordnung von Rufnummern zu Objekten entfallen kann.

Weiterhin ermöglicht die Objektbezeichnung vorteilhafterweise eine Gruppenzuordnung, wodurch mehrere Teilnehmer einer Gruppe zugeordnet werden können. Dabei können verschiedene Objektbezeichnungen verschiedenen Teilnehmern zugeordnet werden, oder kann die gleiche Objektbezeichnung verschiedenen Teilnehmern zugeordnet werden, so daß auch das Vorsehen von redundanten Teilnehmern ermöglicht wird.

Auch kann mit dem erfindungsgemäßen Kommunikationsverfahren vorteithafterweise eine örtliche und/oder zeitliche Zuordnung der Teilnehmer zu einer Gruppe vorgenommen werden. Beispielsweise verfügt das Kommunikationssystem über eine Anbindung an ein örtliches Lokalisierungssystem oder ein GPS-System, das die örtliche Anordnung der Teilnehmer und deren Geräte kennt, so daß dadurch eine örtliche Zuordnung ermöglicht wird. Alternativ oder gleichzeitig kann auch eine zeitlich vorbestimmte Zuordnung der Teilnehmer erfolgen.

Ein weiterer großer Vorteil ist die flexible Parametrisierung der Objektbezeichnung. Bevorzugt kann die Objektbezeichnung multidimensional sein und die Anzahl und Länge der einzelnen Felder der Objektbezeichnung ist frei bestimmbar. Dadurch kann das Kommunikationsverfahren unterschiedlichsten Objektbezeichnungen entsprechend den Wünschen der Betreiber angepaßt werden.

Weiterhin ist vorteilhaft, daß die Objektbezeichnung voreinstellbare Parameter aufweisen kann. So kann die Objektbezeichnung beispielsweise die Zuordnung "nur Hören" beinhalten, so daß derjenige Teilnehmer, dessen Teilnehmergerät diese Objektbezeichnung aufweist, nicht aktiv an der Kommunikation, sondern nur passiv, nämlich nur durch Hören teilnehmen kann. Dies bedeutet, daß es möglich ist, das einzelne Teilnehmer bei einer Gruppe mitmachen, diese aber nicht aktivieren können.

Auch weist das erfindungsgemäße Kommunikationssystem den Vorteil auf, daß die Beendigung der Teilnahme an einer Objektkommunikation durch den Teilnehmer selbst erfolgen kann.

Die vorliegende Erfindung wird anhand eines Ausführungsbeispiels näher erläutert, wobei sie selbstverständlich auf dieses Ausführungsbeispiel nicht beschränkt ist. Das Ausführungsbeispiel ist anhand von Zeichnungen schematisch dargestellt, in denen:
- Fig. 1 ein erfindungsgemäßes dezentrales Kommunikationssystem zeigt,
- Fig. 2 ein Kommunikationssystem mit einer Vermittlungseinrichtung (Main Switch) und zwei Basisstationen zeigt, und
- Fig. 3 schematisch verschiedene Möglichkeiten und Zuordnungen aufgrund von zugeteilten Objektbezeichnungen darstellt.

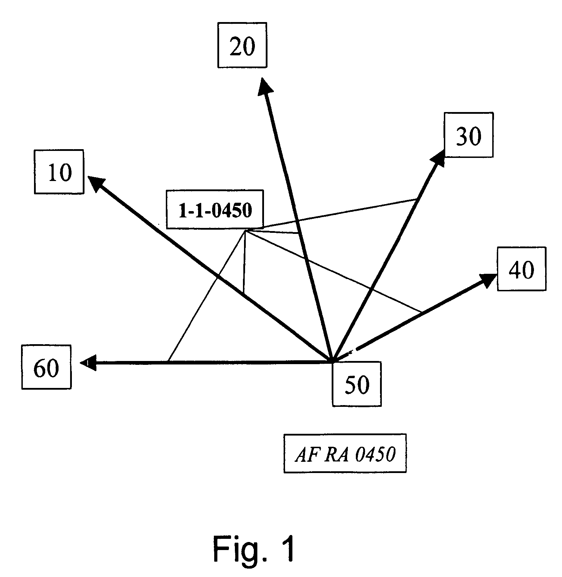

Bei dem dargestellten Ausführungsbeispiel handelt es sich um ein Kommunikationssystem, insbesondere ein PMR-System zur Übertragung von Sprache und/oder Daten bei einem Flughafen. Das erfindungsgemäße Kommunikationssystem 1 weist gemäß Fig. 1 Teilnehmer 10, 20, 30, 40, 50, 60 auf, die jeweils über ein entsprechendes Teilnehmergerät verfügen.

Der Teilnehmer 50 sendet einen Objekt-Kommunikationswunsch 1-1-0450 aus. Im dargestellten Beispielsfalle bedeutet die erste Ziffer "1" die Bezeichnung der Fluggesellschaft, die zweite Ziffer "1" die Tätigkeit Ramp Agent "RA" und die Ziffern "0450" die Flugnummer, so daß sich daraus ergibt, daß der Teilnehmer 50 eine Anfrage an den Ramp Agent (RA) beispielsweise von Air France (AF) mit der Flugnummer 0450 hat. Wie dargestellt erfolgt eine direkte Kommunikation zwischen dem Teilnehmergerät des Teilnehmers 50 und den Teilnehmergeräten der anderen Teilnehmer.

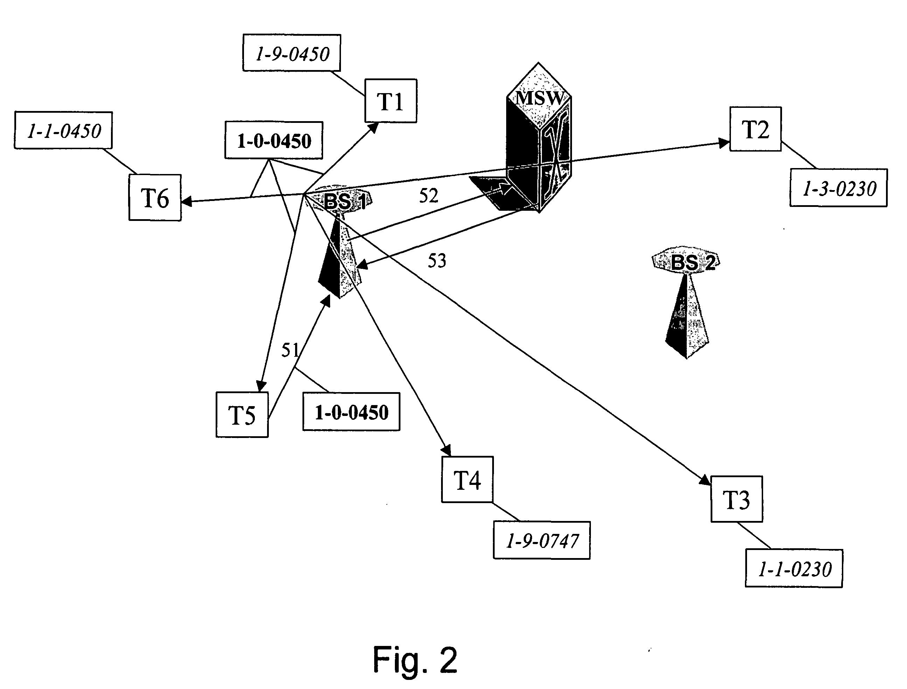

In Fig. 2 ist beispielhaft eine andere Konfiguration eines Kommunikationssystems dargestellt, mit Teilnehmern T1 bis T6, zwei Basisstationen BS1 und BS2 und einer Vermittlungsstation (Main Switch) MSW. Die Basisstation BS2 ist im dargestellten Beispielsfalle nur redundant und wird erst bei Ausfall von BS1 in Betrieb genommen. Den Teilnehmern T1 bis T6 sind Objektbezeichnungen zugeteilt, wie aus den jeweils angehängten Balken ersichtlich.

Teilnehmer T5 sendet eine Objekt-Kommunikationwunsch 1-0-0450 aus, wobei die erste Ziffer 1 die Fluggesellschaft und die letzten vier Ziffern den Flug Nr. 0450 bedeutet. Mit der mittleren Ziffer "0" wird ein "Joker" oder eine "wild card" bezeichnet: Alle Teilnehmer der Fluggesellschaft mit Ziffer 1 und der Flugnummer 0450 werden angesprochen.

Der Verbindungsaufbauwunsch geht gemäß Pfeil 51 zunächst zu der Basisstation BS1. Zur Verwaltung aller Zuordnungen ist eine Vermittlungsstation vorgesehen, auch Main Switch genannt. Die Basisstation BS1 sendet gemäß Pfeil 52 den Verbindungsaufbauwunsch zum Main Switch MSW und dieser diesen zur BS1 zurück. Von dort wird der Verbindungsaufbau an die Teilnehmer T1 bis T6 gesendet, wobei aufgrund der entsprechenden Objektbezeichnungen nur die Teilnehmer T1 und T6 in die Objekt-Kommunikation eintreten.

Bei Ausfall der Basisstation erfolgt die Signalverbreitung über die Basisstation BS2.

In einer anderen - nicht dargestellten - Variante können die Basisstationen BS1 und BS2 gleichzeitig betrieben werden, derart, daß die einen Teilnehmer nur über die Basisstation BS1 und andere Teilnehmer über die Basisstation BS2 erreichbar sind bzw. diese erreichen können. Dadurch wird ein entsprechend größerer Kommunikationsbereich geschaffen. Der Koordinator oder Main Switch MSW organisiert dabei die entsprechende Zuordnung der Teilnehmer.

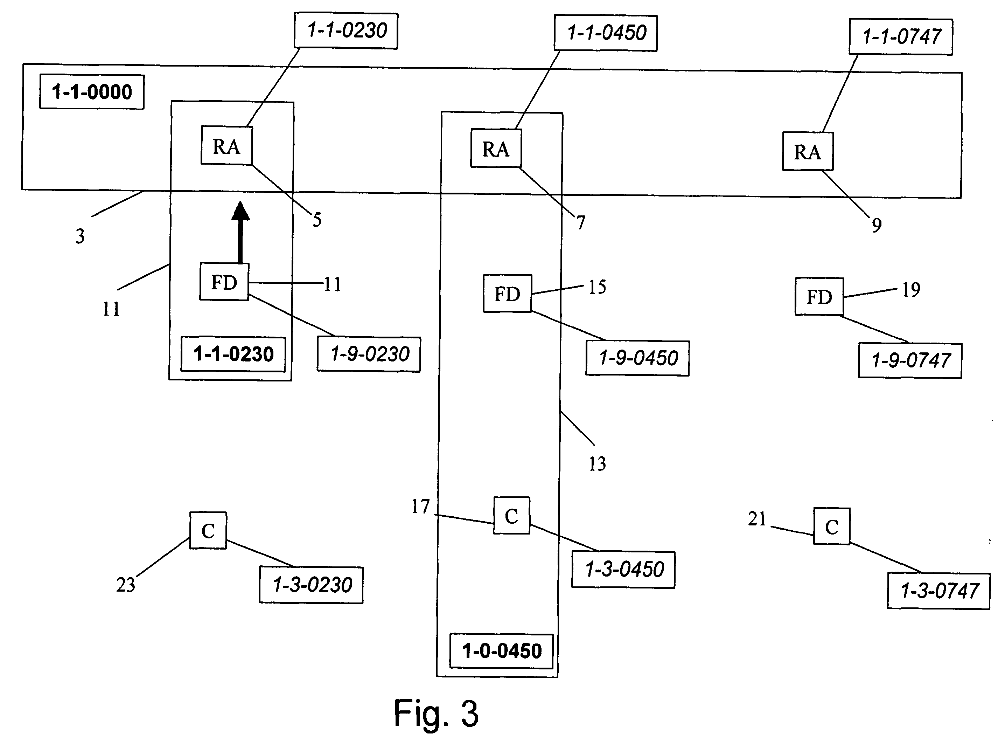

In Fig. 3 sind verschiedene Möglichkeiten der dezentralen Kommunikation dargestellt. In dem Balken 3 ist die Ebene der Ramp Agents RA dargestellt, die mit einer funktionellen Objektbezeichnung 1-1-0000 gemeinsam angesprochen werden können. Die Ziffernfolge 0000 bedeutet, daß alle Ramp Agents, die die Codierung 1-1 haben (erste Ziffer 1 beispielsweise für die Fluggesellschaft Air France) unabhängig von der Flugnummer gemeinsam angesprochen werden können und damit an der Objekt-Kommunikation teilnehmen können. Die Bezeichnung "0000" entspricht somit einer "Wild Card", wobei jede einzelne "0" als Platzhalter für eine der Ziffern 1 bis 9 oder auch einen Buchstaben stehen kann.

Mit FD sind die Flight Dispatches angesprochen, die im dargestellten Beispielsfall mit der zweiten Ziffer "9" bezeichnet sind.

Dem Ramp Agent 5 ist die Objektbezeichnung 1-1-0230 zugeordnet, dem Ramp Agent 7 die Objektbezeichnung 1-1-0450 und dem Ramp Agent 9 die Objektbezeichnung 1-1-0747 zugeordnet. Der Flight Dispatch mit der Objektbezeichnung 1-9-0230 ist aufgrund dieser in der Lage, mit dem Ramp Agent 5 zu kommunizieren, wenn er die Objektbezeichnung 1-1-0230 anfordert.

Der Balken 13 symbolisiert die Objekt-Kommunikation der Flugnummer 0450 die mit der Adressierung 1-0-0450 alle Teilnehmer dieser Flugnummer in Verbindung setzt, die im Beispielsfalle der Ramp Agent 7, der Flight Dispatch 15 und der Catering Service C mit Bezugsziffer 17 sind. Mit anderen Worten: durch Anforderung eines Teilnehmers mittels der Objektbezeichnung 1-0-0450 werden alle Teilnehmer der Fluggesellschaft "1" mit der Flugnummer "0450" miteinander in Kommunikation versetzt, wie das auch unter Bezugnahme auf Fig. 2 bereits erläutert wurde.

Wie weiter aus Fig. 3 ersichtlich, existiert noch keine Anforderung für den Flug 0747, da Flight Dispatch 19 mit Objektbezeichnung 1-9-0747 und Catering Service 21 mit Objektbezeichnung 1-3-0747 noch nicht angefragt wurden. Gleiches gilt auch für den Catering Service 23 mit Objektbezeichnung 1-3-0230.

Aus Fig. 3 wird somit ersichtlich, daß mit entsprechenden "Wild Card"-Objektbezeichnungen, wie mit 1-1-0000 dargestellt, alle Ramp Agents angesprochen werden können oder mit "Wild Card"-Objektbezeichnung 1-0-0450 alle Teilnehmer betreffend Flugnummer 0450 angesprochen werden können. Wollte man alle Catering Service C ansprechen, müßte entsprechend die Objektbezeichnung 1-3-0000 angefragt werden.

Aus der vorgenannten Beschreibung ergibt sich somit die einfache dezentrale Möglichkeit einer Gruppenzusammenfassung, wobei besonders vorteilhaft mittels der entsprechenden Objektbezeichnung die Verbindung zu den entsprechenden Teilnehmern der Gruppe aufgebaut werden kann ohne daß zusätzliche Rufnummernzuordnungen notwendig sind, was zu einer deutlichen Reduzierung des Funkverkehrs führt.

Die in den Beispielsfällen angegebene parametrisierte Objektbezeichnung, erste Stelle für die Einheit, zweite Stelle für die Aufgabe sowie Stellen drei bis sechs für das Objekt, sind erfindungsgemäß nicht auf diese Codierung beschränkt. Das erfindungsgemäße Kommunikationsverfahren zur Übertragung von Sprache und/oder Daten ermöglicht auch eine flexible Parametrisierung der Objektbezeichnung. Beispielsweise kann eine Objektbezeichnung wie folgt aufgebaut werden:

3.2.3.1, mit folgender Bedeutung: Erste Ziffer "3" bedeutet drei Felder, wobei das erste Feld zwei Stellen, das zweite Feld drei Stellen und das dritte Feld eine Stelle aufweist. Die Felder können numerische oder alphanumerische Felder sein, so daß eine Objektbezeichnung sowohl Zahlen als auch Buchstaben aufweisen kann.

Je nach Anwendungsfall lassen sich erfindungsgemäß die Objektbezeichnungen variabel aufbauen, so daß das erfindungsgemäße Kommunikation verfahren zur Übertragung von Sprache und/oder Daten für eine beliebige Anzahl und Struktur von individuellen Teilnehmern geeignet ist.

Die damit erreichte Flexibilität ermöglicht somit die kommunikative Verbindung unterschiedlichster Ebenen. So können beispielsweise vom Netzbetreiber-Arbeitsplatz aus gleichzeitig mehrere Fluggesellschaften oder alle Fluggesellschaften angesprochen werden und/alle Flight Dispatches etc. Entsprechend flexibel ist auch die Ansprache einzelner anderer Gruppen.

Die vorliegende Erfindung wurde beispielhaft anhand eines Flughafen-Kommunikationssystems beschrieben. Selbstverständlich läßt sich die vorliegende Erfindung auch auf jegliche andere Kommunikationssysteme, beispielsweise von Schiffshäfen, Unfallrettungssystemen, Speditionen aller Art und dergleichen anwenden. Dabei können reine Funksysteme, festverdrahtete Systeme und eine Kombination aus diesen zur Anwendung kommen.

Die Objektbezeichnungen können auch derart konfiguriert sein, daß ein Teil der Objektbezeichnung beim Aufbau der Objekt-Kommunikation auf den Signalisierungskanal des Kommunikationsnetzes gehen, der die dieser Objektbezeichnung zugeordneten Teilnehmergeräte anspricht und sie zur Teilnahme an der Objekt-Kommunikation anregt, und ein anderer Teil der Objektbezeichnung auf den Kommunikationskanal geht, der zur Übertragung von Sprache und/oder Daten dient.

Mit der vorliegenden Erfindung wird somit ein universell einsetzbares, dezentrales Kommunikationsverfahren geschaffen, bei dem eine flexible und freie Parametrisierung der Objektbezeichnung möglich ist. Eine bei bisherigen Systemen notwendige Rufnummernzuteilung zusätzlich zur Objektbezeichnung wird vermieden, da die Objektbezeichnung an die Stelle der Rufnummer tritt.

## Patentansprüche

1. Verfahren zur Kommunikation von Sprache und/oder Daten in einem dezentralen Kommunikationssystem, insbesondere in einem PMR-System, bestehend aus einer Mehrzahl von individuellen Teilnehmern mit jeweils einem Teilnehmergerät, die mit einer Kommunikationsschnittstelle ausgestattet sind, um Kommunikationssignale zu senden und von anderen Teilnehmern zu empfangen, wobei Teilnehmer mit wenigstens einem Objekt assoziiert sind, die jeweils mit einer allen Teilnehmern bekannten Objektbezeichnung bestimmt werden;
bestehend aus den Schritten:
- Zuweisen einer, dem mit dem Teilnehmer assoziierten Objekt entsprechenden, Objektbezeichnung an das Teilnehmergerät ausschließlich mittels Speicherung im Teilnehmergerät;
- Erzeugen eines Objekt-Kommunikationswunsches durch einen Teilnehmer an seinem Teilnehmergerät, der eine Objektbezeichnung enthält, die das Objekt, mit dessen assoziierten Teilnehmern die Kommunikation gewünscht wird, bestimmt;
- Aussenden des Objekt-Kommunikationswunsches durch das Teilnehmergerät an alle anderen Teilnehmergeräte;
- Empfangen des Objekt-Kommunikationswunsches in den Teilnehmergeräten und Auswerten der darin enthaltenen Objektbezeichnung;
- Entscheiden über den Eintritt in die gewünschte Objektkommunikation, falls wenigstens eine gespeicherte und die empfangene Objektbezeichnung übereinstimmen;
- Aufbauen einer Objektkommunikation zwischen dem rufenden Teilnehmergerät und dem bzw. den Teilnehmergerät(en) des bzw. der mit dem gewünschten Objekt assoziierten Teilnehmer(s).

2. Verfahren nach Anspruch 1, **dadurch gekennzeichnet, dass** die Objektbezeichnung durch den Teilnehmer, der über das Teilnehmergerät verfügt, in das Teilnehmergerät eingegeben wird.

3. Verfahren nach Anspruch 1, **dadurch gekennzeichnet, dass** die Objektbezeichnung durch einen Teilnehmer, der über ein anderes Teilnehmergerät verfügt, in das Teilnehmergerät eingegeben wird.

4. Verfahren nach Anspruch 1, **dadurch gekennzeichnet, dass** die Objektbezeichnung von einem das Kommunikationsnetz verwaltenden Verwaltungsrechner an ein Teilnehmergerät übermittelt wird.

5. Verfahren nach einem der Ansprüche 1 bis 4, **dadurch gekennzeichnet, dass** die Objektbezeichnung als Kommunikationsidentität verwendet wird.

6. Verfahren nach einem der Ansprüche 1 bis 5, **dadurch gekennzeichnet, dass** mittels der Objektbezeichnung eine Gruppenzuordnung durchgeführt wird, wodurch mehrere Teilnehmer einer Gruppe zugeordnet werden können.

7. Verfahren nach Anspruch 6, **dadurch gekennzeichnet, dass** eine örtliche Zuordnung der Teilnehmer zu einer Gruppe vorgenommen wird.

8. Verfahren nach einem der Ansprüche 1 bis 7, **dadurch gekennzeichnet, dass** die Parametrisierung der Objektbezeichnung flexibel, insbesondere frei strukturierbar ist.

9. Verfahren nach einem der Ansprüche 1 bis 18, **dadurch gekennzeichnet, dass** die Objektbezeichnung voreinstellbare Parameter aufweisen kann.

10. Verfahren nach Anspruch 9, **dadurch gekennzeichnet, dass** durch die Objektbezeichnung die Teilnehmergeräte auf bestimmbare Funktionen beschränkbar sind.

11. Verfahren nach einem der Ansprüche 1 bis 10, **dadurch gekennzeichnet, dass** die Beendigung der Teilnahme an der Objektkommunikation durch den Teilnehmer selbst durchgeführt wird.

## Claims

1. Method for voice and/or data communication in a decentralised communications system, especially in a PMR system, comprising a plurality of individual subscribers each having a user terminal equipped with a communications interface in order to transmit communications signals and receive same from other subscribers, the subscribers being associated with at least one object and being respectively designated by one object identifier known to all the subscribers;
comprising the steps:
- allocating to the user terminal an object identifier, which corresponds to the object associated with the subscriber, solely by means of storing said identifier in the user terminal;
- generating an object communication request by a subscriber at his user terminal, which contains an object identifier, which determines the object, with the associated subscribers of which the communication is desired;
- transmitting the object communication request by the user terminal to all the other user terminals;
- receiving the object communication request in the user terminals and evaluating the object identifier contained therein;
- deciding on entering into the desired object communication if at least one stored object identifier and the received object identifier match;
- setting up an object communication between the calling user terminal and the user terminal (s) of the subscriber(s) associated with the desired object.

2. Method according to claim 1, **characterised in that** the object identifier is input into the user terminal by the subscriber who has the user terminal.

3. Method according to claim 1, **characterised in that** the object identifier is input into the user terminal by a subscriber who has a different user terminal.

4. Method according to claim 1, **characterised in that** the object identifier is communicated to a user terminal by a managing computer which manages the communications network.

5. Method according to one of claims 1 to 4, **characterised in that** the object identifier is used as the communication identity.

6. Method according to one of claims 1 to 5, **characterised in that** by means of the object identifier a group allocation is carried out, whereby a plurality of subscribers can be allocated to a group.

7. Method according to claim 6, **characterised in that** a local allocation of the subscribers to a group is carried out.

8. Method according to one of claims 1 to 7, **characterised in that** the parameterisation of the object identifier is flexible, especially freely structurable.

9. Method according to one of claims 1 to 8, **characterised in that** the object identifier can have presettable parameters.

10. Method according to claim 9, **characterised in that** the user terminals can be limited to specific functions by the object identifier.

11. Method according to one of claims 1 to 10, **characterised in that** participation in the object communication is terminated by the subscriber himself.

## Revendications

1. Procédé de communication de voix et/ou de données dans un système de communication décentralisé, en particulier dans un système PMR, constitué d'une pluralité d'utilisateurs individuels avec chacun un appareil d'abonné équipé d'une interface de communication, pour émettre des signaux de communication et en recevoir d'autres utilisateurs, des utilisateurs étant associés à au moins un objet chacun défini par une désignation d'objet connue de tous les utilisateurs,
comprenant les phases :
- assignation d'une désignation d'objet à l'appareil d'abonné, correspondante à l'objet associé à l'utilisateur, exclusivement par mémorisation dans l'appareil d'abonné,
- formation d'un souhait de communication d'objet par un utilisateur sur son appareil d'abonné, lequel souhait comporte une désignation d'objet définissant l'objet associé aux utilisateurs avec lesquels est souhaitée la communication,
- envoi du souhait de communication d'objet par l'appareil d'abonné à tous les autres appareils d'abonnés,
- réception du souhait de communication d'objet dans les appareils d'abonnés et analyse de la désignation d'objet contenue dans le souhait,
- décision sur l'entrée dans la communication d'objet souhaitée, si au moins une désignation d'objet mémorisée et la désignation reçue coïncident,
- établissement d'une communication d'objet entre l'appareil d'abonné demandeur et le et/ou les appareils d'abonnés du et/ou des utilisateurs associés à l'objet souhaité.

2. Procédé suivant la revendication 1, **caractérisé en ce que** l'utilisateur, qui dispose de l'appareil d'abonné, introduit la désignation d'objet dans l'appareil.

3. Procédé suivant la revendication 1, **caractérisé en ce qu'**un utilisateur, qui dispose d'un autre appareil d'abonné, introduit la désignation d'objet dans l'appareil.

4. Procédé suivant la revendication 1, **caractérisé en ce que** la désignation d'objet est transmise à un appareil d'abonné par un ordinateur de gestion gérant le réseau de communication.

5. Procédé suivant l'une des revendications 1 à 4, **caractérisé en ce que** la désignation d'objet est utilisée en tant qu'identité de communication.

6. Procédé suivant l'une des revendications 1 à 5, **caractérisé en ce qu'**une association de groupe est effectuée au moyen de la désignation d'objet, plusieurs utilisateurs pouvant être de ce fait associés à un groupe.

7. Procédé suivant la revendication 6, **caractérisé en ce qu'**une association locale des utilisateurs à un groupe est assurée.

8. Procédé suivant l'une des revendications 1 à 7, **caractérisé en ce que** le paramétrage de la désignation d'objet est souple, en particulier librement structurable.

9. Procédé suivant l'une des revendications 1 à 8, **caractérisé en ce que** la désignation d'objet peut présenter des paramètres pré-réglables.

10. Procédé suivant la revendication 9, **caractérisé en ce que** les appareils d'abonnés peuvent être limités à des fonction définissables par la désignation d'objet.

11. Procédé suivant l'une des revendications 1 à 10, **caractérisé en ce que** la fin de la participation à la communication d'objet est réalisée par l'utilisateur lui-même.
